(19) **Europäisches Patentamt European Patent Office Office européen des brevets**

(11) **EP 4 020 840 B1**

(12) **EUROPEAN PATENT SPECIFICATION**

(45) Date of publication and mention
of the grant of the patent:
**01.04.2026 Bulletin 2026/14**

(21) Application number: **20315506.4**

(22) Date of filing: **24.12.2020**

(51) International Patent Classification (IPC):
***H04B 10/071*** *(2013.01)*

(52) Cooperative Patent Classification (CPC):
**H04B 10/071**

(54) **FIBER EVENT DETECTION USING SPECTRAL DIVERSITY AND RELIABILITY METRICS**

FASEREREIGNISDETEKTION UNTER VERWENDUNG VON SPEKTRALER DIVERSITÄT UND ZUVERLÄSSIGKEITSMETRIKEN

DÉTECTION D'ÉVÉNEMENTS DE FIBRES À L'AIDE DE MESURES DE LA DIVERSITÉ SPECTRALE ET DE LA FIABILITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.06.2022 Bulletin 2022/26**

(73) Proprietor: **Nokia Solutions and Networks Oy
02610 Espoo (FI)**

(72) Inventors:
• **DORIZE, Christian
78320 Le Mesnil-Saint-Denis (FR)**
• **GUERRIER, Sterenn
91300 Massy (FR)**

(74) Representative: **Innovincia et al
11, avenue des Tilleuls
74200 Thonon-Les-Bains (FR)**

(56) References cited:
**EP-A1- 3 694 117**

**Description**

**BACKGROUND**

Field of the Invention

Various example embodiments relate to optical equipment such as optical communication equipment and, more particularly but not exclusively, to optical sensing along optical fibers using distributed acoustic/vibration sensing (DAS/DVS).

Description of the Related Art

This section introduces aspects that may help facilitate a better understanding of the invention. Accordingly, the statements of this section are to be read in this light and are not to be understood as admissions about what is prior art or what is not prior art.

Optical fibers are sensitive to surrounding mechanical perturbations which induce fiber length variations, potentially resulting in variations of phase, intensity, and polarization.

Though these variations are considered as noise and are thus mitigated in optical transmission systems, they are used for sensing applications in specific configurations such that Optical Time-Domain Reflectometry (OTDR), which exploits random and low-intensity Rayleigh backscattered light.

In a number of different applications, it is useful to be able to detect time-based mechanical and/or chemical changes along an optical fiber, referred to herein collectively as fiber events. For example, in communications systems having fiber-optic communication links, it may be useful to detect the existence and location of fiber events in an optical fiber, such as those induced by a train passing nearby the optical fiber. This information may be used to monitor the quality of the optical link (e.g., a vibration may alter the transmission rate) or to monitor any fiber event independent of the telecom purpose (e.g., for security alerts).

Distributed acoustic/vibration sensing (DAS/DVS) allows for detection of mechanical and/or chemical perturbation at various locations along an optical fiber using Rayleigh backscattering. This effect can be exploited in standard single-mode fibers (SSMF) deployed in telecommunication systems. Randomly distributed Rayleigh backscattering spots exist in the fiber as imperfections during its fabrication process. By capturing the optical signal that is reflected from these spots, phase changes induced by fiber events impacting a deployed fiber can be detected.

The document EP 3694117A1 discloses an optical sensing system comprising: an optical transceiver configured to transmit a signal having multiple modulated sub-carriers into an end of an optical fiber line having reflectors distributed along the fiber and to perform phase-sensitive measurements on a part of the transmitted light received from the same end of the optical fiber line and wherein the optical transceiver includes is configured to receive a multi-carrier reflected optical signal corresponding to reflections of the transmitted multi-carrier modulated signal from the reflectors to detect fiber events along the optical fiber.

SUMMARY

The cited papers describe methods and apparatus for periodically capturing an estimate (high sensitivity and large bandwidth) of the backpropagated optical field in a fiber which may be used in various embodiments described herein. The methods and apparatus may yield estimates of parameters of a Jones matrix as a function of distance and time along an optical fiber line. For example, the cited papers describe methods and apparatus for estimating the phase of the determinant of the Jones matrix at different locations as a function of time, and such apparatus and/or methods may be used in some embodiments herein to detect the emergence of fiber events.

The inventors have realized that some prior art techniques and systems do not seem to fully address issues related to coherent fading, which is also known as speckle noise. Speckle noise results, because light backscattered from different locations along the optical fiber line is mutually coherent and may interfere providing a modulation of the total light intensity along the optical fiber line. As a result of such speckle, the intensity of the combined backscattered light can vanish or be substantially reduced at certain locations along the optical fiber line due to destructive interference. The extraction of reliable optical sensing information by optical backscattering at those locations is difficult or not possible. This can lead to sensing artefacts that locally distort the backscattering of light, potentially leading to misinterpretation, such as false positive and/or false negative detections of fiber events at particular locations along the optical fiber line.

According to certain embodiments of the present disclosure, optical systems and methods detect and estimate locations of fiber events in an optical fiber line a based on optical frequency division multiplexing (OFDM). In particular, the systems and methods evaluate reliability metrics for OTDR for different subcarriers of OFDM probe signals. Various embodiments use a set of reliability metrics, which are the magnitude of the determinant of the Jones matrix for different locations along an optical fiber line and different times corresponding to different sub-carrier frequencies of an OFDM probing signal injected into the optical fiber line. In addition to being used to generate the final Jones matrices, such a reliability metric can be used to select a subset of the available fiber locations for fiber-event detection, where the selected locations are those that produce more-reliable results. In addition or alternatively, since fiber events are detected at particular locations and times and since the reliability metrics indicate the reliability of the estimated phase values at particular locations and times, the corresponding reliability metric at the location and time associated with a detected fiber event can be used to characterize the reliability of that fiber-event detection.

According to certain embodiments, different sub-carrier reliability metrics are used to generate final Jones matrices from corresponding sets of sub-carrier Jones matrices because:

- The responses captured in different OFDM subcarrier channels may be naturally synchronized;

- The Rayleigh backscatter intensity responses observed at the receiver side may be separated for different OFDM subcarriers; and

- The state of polarization may be invariant between the subcarriers at a time-distance position.

Thus, the Jones matrices of different subcarriers may be independent. This independence may be exploited in generating the final Jones matrices from the corresponding sub-carrier Jones matrices.

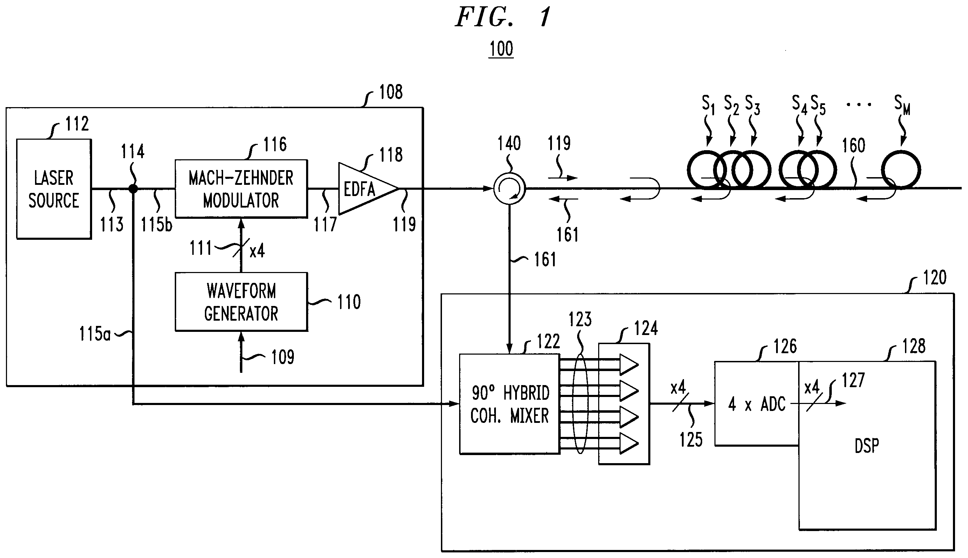

According to an example embodiment disclosed below in reference to FIGs. 1-7, provided is an apparatus comprising an optical transceiver (e.g., 108, 130, 140) configured to transmit light (e.g., 119) having multiple modulated sub-carriers into an end of an optical fiber line (e.g., 160) and to perform phase-sensitive measurements of a part (e.g., 161) of the transmitted light received from the same end of the optical fiber line. The optical transceiver includes a digital processor (e.g., 128) configured to determine sub-carrier dual-polarization channel matrices (e.g., Jones matrices) for corresponding sets of sub-carrier, time, and location values (e.g., $S_i$) based on the measurements, each of the sub-carrier dual-polarization channel matrices describing the part of the light for the subcarrier value of one of the sets received from the end in response to being passively redirected back at the time and location values of the one of the sets. For pairs of time and location values, the digital processor is configured to generate final dual-polarization channel matrices, each final dual-polarization channel matrix being generated based on the determined sub-carrier dual-polarization channel matrices for the time and location values of a corresponding one of the pairs and corresponding sub-carrier reliability metrics, each sub-carrier reliability metric being derived from a corresponding one of the determined sub-carrier dual-polarization channel matrices and indicating the reliability of estimated phase values at a particular location and time.

In some embodiments of the above apparatus, each sub-carrier reliability metric is the magnitude of the determinant of the corresponding one of the determined sub-carrier dual-polarization channel matrices.

In some embodiments of any of the above apparatuses, the digital processor is configured to detect one or more fiber events along the optical fiber line based on a time evolution of one or more of the determined final dual-polarization channel matrices.

In some embodiments of any of the above apparatuses, the digital processor is configured to detect the one or more fiber events based on a time evolution of phases of the determinants of the determined final dual-polarization channel matrices.

In some embodiments of any of the above apparatuses, the digital processor is configured to provide estimated locations and times for the detected one or more fiber events.

In some embodiments of any of the above apparatuses, the optical transceiver is further configured to characterize a reliability of detection of one of the one or more fiber events based on a magnitude of the determinant of the determined final dual-polarization channel matrix at the estimated location and time for the one of the one or more fiber events.

In some embodiments of any of the above apparatuses, the optical transceiver is configured to perform optical time-domain reflectometry on a part of the transmitted light received at the same end of the same optical fiber of the optical fiber line.

According to another example embodiment disclosed below in reference to FIGs.1-7, provided is a method comprising determining dual-polarization channel matrices for sets of sub-carrier, time, and location values by performing phase-sensitive optical time-domain reflectometry on an optical fiber line (e.g., 160), each of the dual-polarization channel matrices describing light (e.g., 161) of the one of the sub-carriers of a corresponding one of the sets being received from an end of the optical fiber line in response to light (e.g., 119) of the one of the sub-carriers being transmitted into the end and backscattering in the optical fiber line at the time and location values of the one of the sets; and, for at least one pair of the time and location values, generating a corresponding final dual-polarization channel matrix based on the determined sub-carrier dual-polarization channel matrices for the at least one pair and sub-carrier reliability metrics, each of the sub-carrier reliability metrics being derived from a corresponding one of the determined sub-carrier dual-polarization channel matrices.

In some embodiments of the above method, each of the sub-carrier reliability metrics is a magnitude of a determinant of the corresponding one of the sub-carrier dual-polarization channel matrices

In some embodiments of any of the above methods, the method further comprising detecting one or more fiber events along the optical fiber line based on a time evolution of the final dual-polarization channel matrices.

In some embodiments of any of the above methods, the method further comprises characterizing reliability of individual ones of the detected one or more fiber events based on magnitudes of the determinants of the final dual-polarization channel matrices at the estimated location and time for the individual ones of the detected one or more fiber events.

## BRIEF DESCRIPTION OF THE DRAWINGS

Embodiments of the invention will become more fully apparent from the following detailed description, the appended claims, and the accompanying drawings in which like reference numerals identify similar or identical elements.

FIG. 1 is a block diagram of an optical sensing system that is designed and configured to detect and determine the locations of fiber events along the length of an optical fiber;

FIG. 2 is a graphical representation of a polarization-multiplexed, multi-carrier probing signal that can be used in the system of FIG. 1;

FIG. 3 represents one polarization axis for an OFDM coding scheme that can be used to generate the probing signal of FIG. 1;

FIG. 4 is a block diagram of the processing performed by the DSP of FIG. 1 to detect fiber events in the optical fiber according to an embodiment;

FIG. 5 is a flow diagram of example processing performed by the optical sensing system of FIG. 1 to select a subset of the available locations along the optical fiber to be used to detect fiber events;

FIG. 6 is a flow diagram of example processing performed by the optical sensing system of FIG. 1 to detect fiber events using the subset of locations selected using the processing of FIG. 5; and

FIG. 7 is a graphical representation of differential phase data $\Delta\varphi(d,t)$ as a function of distance d for a given instant in time t for the optical sensing system of FIG. 1 employing a multi-carrier probing signal vs. an analogous optical sensing system employing a single-carrier probing signal.

## DETAILED DESCRIPTION

Detailed illustrative embodiments of the present invention are disclosed herein. However, specific structural and functional details disclosed herein are merely representative for purposes of describing example embodiments of the present invention. The present invention may be embodied in many alternate forms and should not be construed as limited to only the embodiments set forth herein. Further, the terminology used herein is for the purpose of describing particular embodiments only and is not intended to be limiting of example embodiments of the invention.

As used herein, the singular forms "a," "an," and "the," are intended to include the plural forms as well, unless the context clearly indicates otherwise. It further will be understood that the terms "comprises," "comprising," "includes," and/or "including," specify the presence of stated features, steps, or components, but do not preclude the presence or addition of one or more other features, steps, or components. It also should be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

At least some embodiments disclosed herein may benefit from the use of at least some features disclosed in the above-cited papers. In particular, some embodiments may benefit from the use of the DAS/DVS technique(s) disclosed therein. An example DAS/DVS technique described herein enables detection of fiber events along an optical fiber using distributed acoustic/vibration sensing based on optical phase sensing of reflected multi-carrier optical signals that are analyzed to detect temporal changes in the characteristics of different locations along the optical fiber.

FIG. 1 is a block diagram of an optical sensing system 100 that is designed and configured to detect and determine the locations of fiber events along the length of an optical fiber 160. The following discussion describes the generic operations of the optical sensing system 100. The frequency-diverse operations of the optical sensing system 100 are described after the generic description.

Generic Description

System 100 comprises an optical transmitter 108, an optical receiver 120, and an optical circulator or coupler 140. As indicated in FIG. 1, the optical fiber 160 has a number ($M$) of Rayleigh backscatterers $S_i$ distributed along its length, where the Rayleigh backscatterers $S_1, S_2, ..., S_M$ are intrinsic features formed during the fabrication and/or deployment of a doped optical fiber. As described previously, the term "fiber event" is used to refer to a mechanical and/or chemical change at a location along the length of the optical fiber 160 that results in a significant change in the differential phases of the signals reflected by one or more Rayleigh backscatterers located downstream of the fiber event.

As used herein, the expression "upstream of a particular location" refers to other locations along the optical fiber 160 that are closer to the optical transmitter 108 than the particular location, while the expression "downstream of the particular location" refers to locations along the optical fiber 160 that are farther from the optical transmitter 108 than the particular location. Thus, in FIG. 1, backscatterers $S_1$ and $S_2$ are upstream of backscatterer $S_3$, and backscatterers $S_4$ and $S_5$ are downstream of backscatterer $S_3$.

In the particular implementation of FIG. 1, the optical transmitter 108 comprises a waveform generator 110, a high-coherence laser source 112, a polarization-maintaining (PM) coupler 114, a dual-polarization Mach-Zehnder (MZ) (or other suitable polarization diversity) optical modulator 116, and an erbium-doped fiber amplifier (EDFA) 118. The PM coupler 114 taps off a portion 115a of the polarized laser signal 113 generated by the laser source 112 and forwards that portion 115a to the optical receiver 120. The MZ modulator 118 modulates the remainder 115b of the laser signal, e.g., based on four digital-coded analog signals 111 generated by the waveform generator 110, to generate a modulated optical signal 117 that may be, e.g., amplified by the EDFA 118 to generate the outgoing modulated optical signal 119. In one possible implementation, the digital-coded analog signals 111 are based on complementary binary phase shift-keying (BPSK) in-phase I and quadrature Q codes that get modulated onto the horizontal (X) and vertical (Y) polarization components of the polarized laser signal 115b. Those skilled in the art will understand that other coding schemes may be employed, including, for example, 3-PSK when the OFDM alphabet is composed of 3 symbols or quadrature-phase shift keying (QPSK) with a 4-symbol OFDM alphabet.

The optical transmitter 108 injects the modulated optical signal 119 as a probing signal into the optical fiber 160, e.g., via the optical circulator 140, where the modulated optical signal 119 gets partially reflected by some Rayleigh backscatterers $S_i$ back towards the optical transmitter 108. The resulting optical signal 161 received by the optical circulator or coupler 140 from the optical fiber 160 is the superposition of different reflected signals from different Rayleigh backscatterers shifted in time (e.g., differential phase) relative to one another based on the round-trip transmission time from the optical circulator or coupler 140 to the particular backscatterer $S_i$ and then back to the optical circulator 140. The combined reflected optical signal 161 is forwarded by the optical circulator or coupler 140 to the optical receiver 120, which processes the optical signal 161 to characterize various reflected signals from the backscatterers $S_i$ at specified locations along the optical fiber 160, where the location $d$ of each backscatterer $S_i$ is associated with and can be identified by a unique round-trip transmission time based on its distance along the optical fiber 160.

The optical receiver 120 of FIG. 1 is a dual-polarization coherent receiver that comprises 90-degree hybrid(s) 122, i.e., an optical mixer, four optical-to-electrical (O-to-E) converters 124, four analog-to-digital converters (ADCs) 126, and a digital signal processor (DSP) 128.

The optical mixer 122, which comprises a parallel array of two single-polarization 90-degree hybrids (not shown), mixes the optical signal 161 received from the optical circulator or coupler 140 with the tapped laser signal 115a received from the coupler 114. The various mixtures of the reflected light and tapped laser signal 115a enables measuring different optical phase and polarization components 123 of the reflected optical signal 161, e.g., about orthogonal in-phase and quadrature-phase components of 2 about orthogonal polarizations. The O-to-E converters 124 converts those optical components 123 into four analog electrical signals 125 that get digitized by the four ADCs 126 into digital signals 127 that are processed by the DSP 128. In one implementation, the O-to-E converters 124 are (i) four balanced photodiode pairs configured to convert intensities of eight optical components 123 into four analog electrical signals and (ii) four trans-impedance amplifiers (TIAs) with lowpass filters configured to amplify the four analog electrical signals to generate the four analog electrical signals 125 that are digitized by the four ADCs 126.

The DSP 128 determines the channel response of the optical fiber 160 by measuring correlations between the digital signals 127 and the digital code sequences 109 used to generate the digital-coded analog signals 111 and then determines separate Jones matrices for different sub-carriers and for different locations along the optical fiber 160 from the digital signals 127. If the optical fiber 160 is probed on both polarization axes by means of complementary digital code sequences, the DSP 128 can measure a 2x2 sub-carrier Jones matrix $J_i(d,t)$ for sub-carrier $i$ at time index $t$ and distance index $d$ of a backscatterer from the four digital signals 127, e.g., using some of the procedures disclosed in the Dorize/Awwad paper.

The DSP 128 derives, from the Jones matrices of various sub-carriers, corresponding sub-carrier reliability metrics that are, in turn, used along with the Jones matrices to generate corresponding final Jones matrices that may, in turn, be used to generate final reliability metrics.

The DSP 128 uses the final Jones matrices to generate differential phase data $\Delta\varphi(d,t)$ as a function of time $t$ for different backscatter locations $d$ along the optical fiber 160, where each location is identified by a distance index value $d$ representative of the round-trip transmission time for that location. Here, the phase data may be the phase of the determinant of a Jones matrix of a sub-carrier or a weighted average of such Jones matrices of some of the subcarriers for the relevant location and time. The DSP 128 (or some other processing module downstream of the DSP 128) analyzes the differential phase data to identify fiber events. For example, if the DSP 128 detects a sinusoidal oscillation over time in the differential phase data for a particular location, then the DSP 128 can determine, e.g., that a vibration in the optical fiber 160 occurred at or near that location. If, on the other hand, the DSP 128 detects a step function over time in the differential phase data for a particular location, then the DSP 128 can determine, e.g., that a chemical change in the optical fiber 160 may have occurred at or near that location. The final reliability metrics can be used to characterize the reliability of the fiber-event detections for individual ones of the Jones matrices of sub-carriers or weighted sums thereof.

The transmission of the modulated optical signal 119 can be periodically repeated, e.g., as long as reflections corresponding to different transmissions of the digital codes do not overlap. One way to prevent such overlap is to ensure that the employed digital codes are at least as long as the maximum round-trip time for transmission from the optical circulator or coupler 140 to the last backscatterer of the optical fiber line and return back therefrom to the optical circulator or coupler 140. In that case, the modulated optical signal 119 can be, but does not have to be, transmitted continuously.

Frequency-Diverse Operations

According to techniques proposed herein, the optical sensing system 100 of FIG. 1 can be employed to further extend the length in a fiber line, such as optical fiber line 160, event sensing can be reliably performed, e.g., by managing the coherent fading effect using frequency diversity. This may be useful for event sensing in already deployed telecom optical fiber lines. In certain implementations, the four digital-coded analog signals 111 modulate the laser signal 115b to generate a modulated optical signal 119 with $N$ spectral sub-carriers. The spectral distance between two adjacent sub-carriers may be chosen to provide independent Rayleigh backscatters. In an embodiment, the laser source 112 that drives the transmitter 108 and the receiver 120 may have a coherence time greater than the maximum roundtrip propagation time of the optical signal 119 on the optical fiber 160 from the transmitter 108 to the receiver 120.

In one example, the optical sensing system 100 monitors the optical fiber 160 to enable monitoring ground comprising oil and gas resources. The symbol frequency may be, e.g., $f_{symb}$=100MHz, with $d_s$=10m, and the optical fiber line 160 have a length equal to about 1km. For example, the coherence time of the laser source 112 may then have a magnitude of about $10^{-5}$ seconds (s) corresponding to a spectral line width of 100 kHz.

In another example, the optical sensing system 100 monitors the optical fiber line 160 in a medical application. The Rayleigh backscatterers in the optical fiber 160 are achieved with Rayleigh effect with a symbol rate of $f_{symb}$=10GHz offering a resolution of 1cm to 10cm, for a length of 1 meter for the optical fiber line 160. The coherence time of the laser source 112 may have a magnitude of about $10^{-7}$s corresponding to a spectral line width of 10MHz.

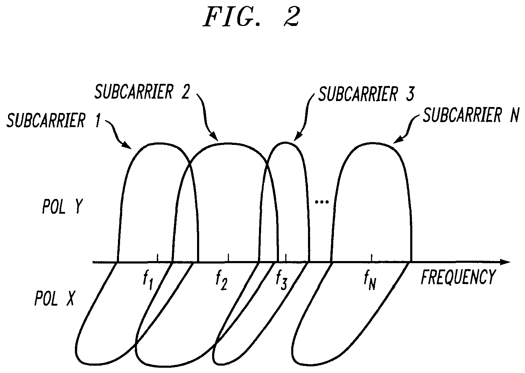

FIG. 2 is a graphical representation of the polarization-multiplexed, multi-carrier digital coded analog signals 111 having $N$ spectral sub-carriers at $N$ different center frequencies $f_1$-$f_N$, as may be output by the MZ modulator 116 to modulate the X and Y polarization axes of the laser signal 115b in generating the polarization-multiplexed, multi-carrier, modulated optical signal 119. Note that, as represented in FIG. 2, different sub-carriers may have different bandwidths (e.g., due to associated different baud rates), the different sub-carrier might or might not spectrally and/or temporally overlap, and/or the code sequences may be the same or different for different sub-carriers. In one example implementation, the laser source 112 generates polarized light 113 having approximately a single frequency (e.g., around 200 THz). Then, the frequency diversity represented in FIG. 2 is obtained by electro-optical modulation (e.g., with a symbol rate of the modulation around 100 MHz, where this bandwidth is split into the $N$ spectral sub-carriers).

The back-reflected optical signal 161 provided to the optical receiver 120 will be the superposition of reflections of the polarization-multiplexed, multi-carrier, modulated optical signal 119 from various backscatterers $S_i$ along the length of the optical fiber 160. By probing the optical fiber 160 using the modulated optical signal 119 having $N$ different sub-carriers, the reflected optical signal 161 can be used to generate $N$ independent characterizations of the optical fiber 160. A characterization by one or more of the sub-carriers might not identify one or more of the different fiber event along the optical fiber 160. But, the characterizations by different sub-carriers will typically identify overlapping subsets of the fiber events. Having multiple characterizations, i.e., by different sub-carriers, should typically increase the total number of detected fiber events and reduce the incidence of false negatives (i.e., undetected fiber events). Moreover, due to the combination of the intrinsic fiber loss and to the coherent fading, the probability of any given characterization failing to detect a fiber event may increase for fiber events that occur further downstream along the optical fiber 160. As such, having multiple independent characterizations of the optical fiber 160 can extend the length over which the optical probing technique is effective along the optical fiber line.

OFDM-Based Coding

In certain implementations of the fiber probing technique described above, the N sub-carriers all have the same bandwidth and are regularly spaced in frequency. In such a case, the transmitted multi-carrier, modulated optical signal 119 of FIG. 1 is conveniently digitally achieved using an orthogonal frequency-division multiplexing (OFDM) coding scheme.

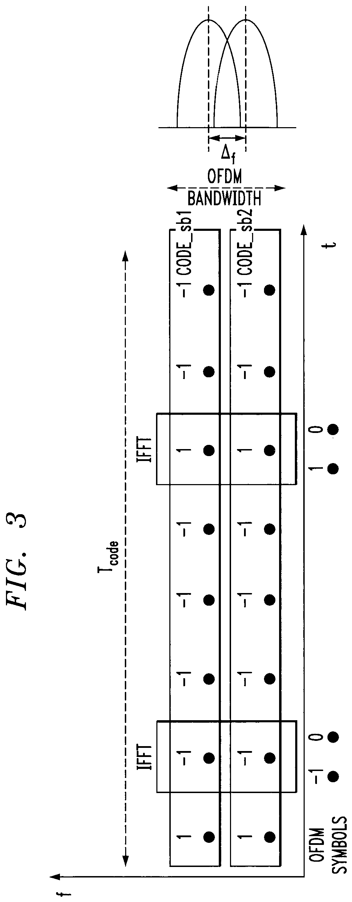

FIG. 3 represents one polarization axis for a simple example of an OFDM coding scheme that can be used to generate a two sub-carrier modulated optical signal 119 of FIG. 1, where the same two digital code sequences are used to encode each sub-carrier: a first OFDM code for the X polarization axis of both sub-carriers and a second OFDM code, which is both complementary and orthogonal to the first OFDM code, for the Y polarization axis of both sub-carriers. Those skilled in the art will understand how to extend the principles of the two-carrier OFDM coding scheme of FIG. 3 to any suitable number of sub-carriers, i.e., to more than two sub-carriers.

In a typical implementation, the same dual-polarization binary code with alphabet {-1,+1} is mapped onto each of the OFDM subcarriers. An IFFT is performed at each column, i.e., to sum contributions of the two OFDM sub-carriers, thereby forming the temporal OFDM symbol flows for driving the optical modulators 116. The OFDM symbols alphabet is then {-1,0,+1} for each of the two polarization axes, and these symbols enter into the (dual-polar) Mach-Zehnder modulator 116. The constellation in the I-Q plane is made of three points (-1,0,+1) on the I axis only or alternatively a 3PSK with 120-degree angles between points.

FIG. 3 presents a generic two-dimensional graphical representation of an example X-axis OFDM code used to produce the two modulated sub-carriers for driving the electro-optical modulator 116 to produce the OFDM modulated optical signal 119. The X-axis OFDM code is divided into N=2 rows, one row for each of the two sub-carriers. The horizontal axis of the graphical representation is time, and the vertical axis is frequency. According to this OFDM coding scheme, the OFDM symbols in the first row are used (from left to right) to modulate the first sub-carrier, and the OFDM symbols in the second row are used (from left to right) to modulate the the second sub-carrier, and these modulated sub-carriers are used to produce one polarization component of the OFDM modulated optical signal 119, i.e., by driving the electro-optical modulator 116. Although not shown in FIG. 3, there is also a complementary, orthogonal Y-axis OFDM code that can be represented by an analogous two-dimensional graph and that is used simultaneously and similarly to modulate two sub-carriers used to drive the electro-optical modulator 116 for producing the orthogonal polarization component of the OFDM modulated optical signal 119.

In the OFDM coding scheme of FIG. 3, Golay sequences are used to generate the X- and Y-axis OFDM codes. In general, a Golay sequence G(n) contains a sequence of values, where each value is either +1 or -1. Two Golay sequences $G_a(n)$ and $G_b(n)$ are said to be complementary if they exhibit the following property:

$$G_a(n) \otimes G_a(n) + G_b(n) \otimes G_b(n) = \delta(n) \qquad (1)$$

where *n is* for a given symbol, $\otimes$ is the correlation operator, and $\delta$ is the Dirac delta function.

In the OFDM coding scheme of FIG. 3, for each sub-carrier, two different pairs of complementary Golay sequences are used to generate the digital-code sequences 109 used to modulate the optical signal 119. The first pair of complementary sequences $G_{1a}$, $G_{1b}$ is defined as:

$$G_{1a}(n) \otimes G_{1a}(n) + G_{1b}(n) \otimes G_{1b}(n) = \delta(n) \qquad (2)$$

The second pair of complementary sequences $G_{2a}$, $G_{2b}$ is generated to be mutually orthogonal with the first pair, such that:

$$G_{2a}(n) \otimes G_{2a}(n) + G_{2b}(n) \otimes G_{2b}(n) = \delta(n) \qquad (3)$$

$$G_{1a}(n) \otimes G_{2a}(n) + G_{1b}(n) \otimes G_{2b}(n) = 0 \qquad (4)$$

$$G_{a1}(n) \otimes G_{b1}(n) + G_{a2}(n) \otimes G_{b2}(n) = 0 \qquad (5)$$

The following represents four Golay sequences having length $N_G = 4$:

$$G_{1a}^4 = [\ \ 1, -1, -1, -1] \tag{6}$$

$$G_{1b}^4 = [-1, \ \ 1, -1, -1] \tag{7}$$

$$G_{2a}^4 = [-1, -1, \ \ 1, -1] \tag{8}$$

$$G_{2b}^4 = [\ \ 1, \ \ 1, \ \ 1, -1] \tag{9}$$

Longer Golay sequences can be generated using the following recursive relationships:

$$G_{1a}^{2Ng} = \left[ G_{1a}^{Ng}, \ \ G_{1b}^{Ng} \right] \tag{10}$$

$$G_{1b}^{2Ng} = \left[ G_{1a}^{Ng}, -G_{1b}^{Ng} \right] \tag{11}$$

$$G_{2a}^{2Ng} = \left[ G_{2a}^{Ng}, \ \ G_{2b}^{Ng} \right] \tag{12}$$

$$G_{2b}^{2Ng} = \left[ G_{2a}^{Ng}, -G_{2b}^{Ng} \right] \tag{13}$$

Four different combinations of Golay sequences $G_{1a}$, $G_{1b}$, $G_{2a}$, and $G_{2b}$ can be used to generate the OFDM symbols for each row of the X- and Y-axis OFDM codes. For example, if the Golay sequences $G_{1a}$ and $G_{1b}$ are used to generate the OFDM symbols for a particular row of the X-axis OFDM code, then the Golay sequences $G_{2a}$ and $G_{2b}$ are used to generate the OFDM symbols for the same row of the Y-axis OFDM code. In general, different combinations of Golay sequences can be used to generate the X- and Y-axis OFDM codes.

In one possible implementation of the OFDM coding scheme of FIG. 3, the Golay sequences of Equations (6)-(9) are used and each OFDM symbol is a BPSK symbol. In that case, the X-axis OFDM code has eight columns of BPSK symbols, where each BPSK symbol encodes one value from the corresponding Golay sequence. Thus, for each row of the X-axis OFDM code, the first four BPSK symbols encode the Golay sequence $G_{1a}^4 = [1, -1, -1, -1]$, and the last four BPSK symbols encode the Golay sequence $G_{1b}^4 = [-1, 1, -1, -1]$. For each row of the Y-axis OFDM code, the first four BPSK symbols encode the Golay sequence $G_{2a}^4 = [-1, -1, 1, -1]$, and the last four BPSK symbols encode the Golay sequence $G_{2b}^4 = [1, 1, 1, -1]$.

In another possible implementation of the OFDM coding scheme of FIG. 3, the Golay sequences of Equations (6)-(9) are used and each OFDM symbol is a QPSK symbol. In that case, the X-axis OFDM code has only four columns of QPSK symbols, where each QPSK symbol encodes one value from each of the two corresponding Golay sequences. Thus, for each row of the X-axis OFDM code, the first QPSK symbol encodes the first value (i.e., 1) in the Golay sequence $G_{1a}^4 = [1, -1, -1, -1]$ and the first value (i.e., -1) in the Golay sequence $G_{1b}^4 = [-1, 1, -1, -1]$, the second QPSK symbol encodes the second value (i.e., -1) in the Golay sequence $G_{1a}^4 = [1, -1, -1, -1]$ and the second value (i.e., 1) in the Golay sequence $G_{1b}^4 = [-1, 1, -1, -1]$, and so on for the third and fourth QPSK symbols. For each row of the Y-axis OFDM code, the first QPSK symbol encodes the first value (i.e., -1) in the Golay sequence $G_{2a}^4 = [-1, -1, 1, -1]$ and the first value (i.e., 1) in the Golay sequence $G_{2b}^4 = [1, 1, 1, -1]$, the second QPSK symbol encodes the second value (i.e., -1) in the Golay sequence $G_{2a}^4 = [-1, -1, 1, -1]$ and the second value (i.e., 1) in the Golay sequence $G_{2b}^4 = [1, 1, 1, -1]$, and so on for the third and fourth QPSK symbols.

Whether the OFDM symbols are BPSK symbols or QPSK symbols, the waveform generator 110 uses the X- and Y-axis OFDM codes to generate the four multi-carrier, digital-coded analog signals 111 used by the MZ modulator 116 to modulate the laser signal 115b to generate the multi-carrier, modulated optical signal 119, where the four analog signals 111 correspond to the in-phase (I) and quadrature (Q) codes for the X polarization axis and the I and Q codes for the Y polarization axis. In particular, to generate the two analog signals 111 corresponding to the I and Q codes for the X polarization axis, the waveform generator 110 sequentially applies an inverse fast Fourier transform (IFFT) of size N=2 to each column of the X-axis OFDM code of FIG. 3, starting with the left-most column and moving from left to right. At the same time, to generate the two analog signals 111 corresponding to the I and Q codes for the Y polarization axis, the waveform generator 110 sequentially applies an IFFT of size N=2 to each column of the Y-axis OFDM code, starting with the left-most column and moving from left to right.

Depending on the particular implementation, the waveform generator 110 may be implemented by the DSP 128 or by a separate processor. Furthermore, the four sets of digital code sequences 111 can be stored in look-up table for subsequent re-transmission or the IFFT processing can be repeated for each re-transmission.

The following description applies to processing associated with the first sub-carrier of the two-carrier, modulated signal 119 for the OFDM coding scheme shown in FIG. 3, where each OFDM symbol is a BPSK symbol. Analogous processing is performed for the second sub-carrier.

The two complementary and orthogonal pairs of Golay sequences $G_{1a}$, $G_{1b}$ and $G_{2a}$, $G_{2b}$ are transmitted simultaneously. BPSK modulation is used to code the pairs of sequences. Using complementary and orthogonal pairs of sequences enables the sending of the sequences to be factorized. On the X polarization axis, the two sequences $G_{1a}$, $G_{1b}$ of the first complementary pair are successively mapped onto BPSK symbols. At the same time, on the Y polarization axis, the two sequences $G_{2a}$, $G_{2b}$ of the second complementary pair are successively mapped onto BPSK symbols. The BPSK symbols from the two polarizations axes are transmitted simultaneously: the BPSK symbols carrying $G_{1a}$ on the X polarization axis are sent at the same time as the BPSK symbols carrying $G_{2a}$ on the Y polarization axis, and then the BPSK symbols carrying $G_{1b}$ on the X polarization axis are sent at the same time as the BPSK symbols carrying $G_{2b}$ on the Y polarization axis.

In an example, the factorization of the parts of the pairs for the X and Y polarizations are as follows:

$$E_{tx}(n + kP) = G_{xI}(n) + jG_{xQ}(n) \qquad (14)$$

$$E_{ty}(n + kP) = G_{yI}(n) + jG_{yQ}(n) \qquad (15)$$

where $E_{tx}$ is the component from the X polarization of the optical signal 119, $E_{ty}$ is the component from the Y polarization of the optical signal 119, P is the repetition period, k is the k-th repetition of period $P$, $G_x$ and $G_y$ being respective complementary Golay sequences.

In an example where BPSK is used, the terms $G_{xQ}$ and $G_{yQ}$ are set to 0 and:

$$G_{xI}(n) = \begin{cases} G_{1a}(n); 0 \leq n < N_G \\ 0; N_G \leq n < N_G + N_{Sep} \\ G_{1b}(n - N_G - N_{Sep}); N_G + N_{Sep} \leq n < 2N_G + N_{Sep} \\ 0; 2N_G + N_{Sep} \leq n < L \end{cases} \qquad (16)$$

$$G_{yI}(n) = \begin{cases} G_{2a}(n); 0 \leq n < N_G \\ 0; N_G \leq n < N_G + N_{Sep} \\ G_{2b}(n - N_G - N_{Sep}); N_G + N_{Sep} \leq n < 2N_G + N_{Sep} \\ 0; 2N_G + N_{Sep} \leq n < L \end{cases} \qquad (17)$$

where $N_G$ is the length of a sequence from the pair, $N_{Sep}$ is a separation interval, and $L=2(Ng+N_{Sep})$ is the overall transmitted code length.

The sequence $G_{1a}$ is transmitted first on the X polarization together with the sequence $G_{2a}$ on the Y polarization, then, after a separation interval, the sequence $G_{1b}$ is transmitted on the X polarization together with the sequence $G_{2b}$ on the Y polarization.

At the receiver 120, the reflected optical signal 161 comprises the following components:

$$E_{rx}(n) = h_{xx}(n) * G_x(n) + h_{xy}(n) * G_y(n) \qquad (18)$$

$$E_{ry}(n) = h_{yx}(n) * G_x(n) + h_{yy}(n) * G_y(n) \tag{19}$$

where $E_{rx}$ is the X polarization component, $E_{ry}$ is the Y polarization component, $h_{xx}$ is the channel response of the optical fiber 160 for the X polarization, $h_{yy}$ is the channel response of the optical fiber 160 for the Y polarization, $h_{xy}$ is the channel response after modulation onto the Y polarization and measured onto the X polarization at the receiver 120, and $h_{yx}$ is the channel response after modulation onto the X polarization and measured onto the Y polarization at the receiver 120.

The polarization-dependent channel responses as observed at the receiver 120 can then be expressed as:

$$h'_{xx}(n) = E_{rx}(n) \otimes G_x(n) \tag{20}$$

$$h'_{xy}(n) = E_{rx}(n) \otimes G_y(n) \tag{21}$$

$$h'_{yx}(n) = E_{ry}(n) \otimes G_x(n) \tag{22}$$

$$h'_{yy}(n) = E_{ry}(n) \otimes G_y(n) \tag{23}$$

where the Jones matrices $J$ are defined as:

$$J = \begin{bmatrix} h'_{xx}(n) & h'_{xy}(n) \\ h'_{yx}(n) & h'_{yy}(n) \end{bmatrix} \tag{24}$$

In an embodiment, the probing sequence duration is determined according to $N_G$, $N_{sep}$, and the duration of a symbol $T_{symb}$. In an example, a perfect estimation with only null samples around the Dirac response is achievable if the optical fiber 160 has an impulse response with a duration $T_{ir}$ that spreads over a time less than $(N_G/2+N_{sep})T_{symb}$. In another example, the sequence length $N_G$ and the separation interval $N_{Sep}$ are determined such that $N_G>2(T_{ir}/T_{symb}-N_{Sep})$.

The following description applies to processing associated with the first sub-carrier of the two-carrier modulated signal 119 for the OFDM coding scheme shown in FIG. 3, where each OFDM symbol is a QPSK symbol. QPSK coding is applicable for optical fibers having equally spaced extrinsic reflectors with relatively high reflection levels instead of the randomly spaced intrinsic Rayleigh backscatterers of optical fiber 160. Analogous processing is performed for the second sub-carrier.

In this embodiment, QPSK modulation is used, and the polarization components are structured with an additional complex component. The complex polarization components of the optical signal 119 at the transmitter 108 are as follows:

$$E_{tx}(n + kN) = G_{xI}(n) + jG_{xQ}(n) \tag{25}$$

$$E_{ty}(n + kN) = G_{yI}(n) + jG_{yQ}(n) \tag{26}$$

where $E_{tx}$ and $E_{ty}$ are complex signals with respective real parts $G_{xI}$ and $G_{yI}$ and respective imaginary parts $G_{xQ}$ and $G_{yQ}$.

The components of the reflected optical signal 161 at the receiver 120 are, for the X polarization:

$$E_{rx}(n) = h_{xx}(n) * E_{tx}(n) + h_{xy}(n) * E_{ty}(n)$$

$$= h_{xx}(n) * (G_{xI}(n) + jG_{xQ}(n)) + h_{xy}(n) * (G_{yI}(n) + jG_{yQ}(n)) \tag{27}$$

and, for the Y polarization:

$$E_{ry}(n) = h_{yx}(n) * E_{tx}(n) + h_{yy}(n) * E_{ty}(n)$$

$$= h_{yx}(n) * (G_{xI}(n) + jG_{xQ}(n)) + h_{yy}(n) * (G_{yI}(n) + jG_{yQ}(n)) \tag{28}$$

The correlation processes to estimate the impulse response for the X and Y polarizations are as follows:

$$h'_{xx}(n) = E_{rx}(n) \otimes (G_{xI}(n) + jG_{xQ}(n))$$

$$= h_{xx} * (G_{xI} \otimes G_{xI} + G_{xQ} \otimes G_{xQ} + j(G_{xQ} \otimes G_{xI} - G_{xI} \otimes G_{xQ})) +$$

$$h_{xy} * (G_{yI} \otimes G_{xI} + G_{yQ} \otimes G_{xQ} + j(G_{yQ} \otimes G_{xI} - G_{yI} \otimes G_{xQ})) \quad (29)$$

$$h'_{xy}(n) = E_{rx}(n) \otimes (G_{yI}(n) + jG_{yQ}(n))$$

$$= h_{xx} * (G_{xI} \otimes G_{yI} + G_{xQ} \otimes G_{yQ} + j(G_{xQ} \otimes G_{yI} - G_{xI} \otimes G_{yQ})) +$$

$$h_{xy} * (G_{yI} \otimes G_{yI} + G_{yQ} \otimes G_{yQ} + j(G_{yQ} \otimes G_{yI} - G_{yI} \otimes G_{yQ})) \quad (30)$$

$$h'_{yx}(n) = E_{ry}(n) \otimes (G_{xI}(n) + jG_{xQ}(n))$$

$$= h_{yx} * (G_{xI} \otimes G_{xI} + G_{xQ} \otimes G_{xQ} + j(G_{xQ} \otimes G_{xI} - G_{xI} \otimes G_{xQ})) +$$

$$h_{yy} * (G_{yI} \otimes G_{xI} + G_{yQ} \otimes G_{xQ} + j(G_{yQ} \otimes G_{xI} - G_{yI} \otimes G_{xQ})) \quad (31)$$

$$h'_{yy}(n) = E_{ry}(n) \otimes (G_{yI}(n) + jG_{yQ}(n))$$

$$= h_{yx} * (G_{xI} \otimes G_{yI} + G_{xQ} \otimes G_{yQ} + j(G_{xQ} \otimes G_{yI} - G_{xI} \otimes G_{yQ})) +$$

$$h_{yy} * (G_{yI} \otimes G_{yI} + G_{yQ} \otimes G_{yQ} + j(G_{yQ} \otimes G_{yI} - G_{yI} \otimes G_{yQ})) \quad (32)$$

Estimation is achievable without crosstalk when the following correlation results hold:

For $h'_{xx}$ and for $h'_{yx}$:

$$G_{xI} \otimes G_{xI} + G_{xQ} \otimes G_{xQ} = \delta \quad (33)$$

$$G_{xQ} \otimes G_{xI} - G_{xI} \otimes G_{xQ} = 0 \quad (34)$$

$$G_{yI} \otimes G_{xI} + G_{yQ} \otimes G_{xQ} = 0 \quad (35)$$

$$G_{yQ} \otimes G_{xI} - G_{yI} \otimes G_{xQ} = 0 \quad (36)$$

For $h'_{xy}$ and for $h'_{yy}$

$$G_{xI} \otimes G_{yI} + G_{xQ} \otimes G_{yQ} = 0 \quad (37)$$

$$G_{xQ} \otimes G_{yI} - G_{xI} \otimes G_{yQ} = 0 \quad (38)$$

$$G_{yI} \otimes G_{yI} + G_{yQ} \otimes G_{yQ} = \delta \qquad (39)$$

$$G_{yQ} \otimes G_{yI} - G_{yI} \otimes G_{yQ} = 0 \qquad (40)$$

With mutually orthogonal codes, Equations (33), (35) (37), (39), are satisfied everywhere, while Equations (34), (36), (38), (40), equal zero for every 4 samples.

When a QPSK modulation is used to code the pair of sequences, using complementary and orthogonal pairs of sequences enable the sending of the sequences to be factorized. On the X polarization axis, the first pair $G_{1a}$, $G_{1b}$ is mapped on QPSK symbols. On the Y polarization axis, the second pair $G_{2a}$, $G_{2b}$ is mapped on QPSK symbols. The QPSK symbols from the two polarizations axes are transmitted simultaneously: the QPSK symbols carrying $G_{1a}$ and $G_{1b}$ on X polarization axis are sent at the same time as the QPSK symbols carrying $G_{2a}$ and $G_{2b}$ on the Y polarization axis. The combination of QPSK modulation with complementary and orthogonal pairs of sequences can be advantageous since it enables a reduction in the transmission time by a factor 2 compared to the use of BSPK modulation.

The pairs of sequences are mapped as follows onto the QPSK symbols:

$$G_{xI}(n) = G_{a1}(n), G_{xQ}(n) = G_{b1}(n) \qquad (41)$$

$$G_{yI}(n) = G_{a2}(n), G_{yQ}(n) = G_{b2}(n) \qquad (42)$$

At the optical receiver 120, the channel responses yielded by the correlation processes are:

$$h'_{xx}(n) = h_{xx}(n) + j(h_{xx}(n) * (G_{xQ}(n) \otimes G_{xI}(n) - G_{xI}(n) \otimes G_{xQ}(n)) + (h_{xy}(n) * (G_{yQ}(n) \otimes G_{xI}(n) - G_{yI}(n) \otimes G_{xQ}(n))) \qquad (43)$$

$$h'_{xy}(n) = h_{xy}(n) - j(h_{xy}(n) * (G_{xQ}(n) \otimes G_{xI}(n) - G_{xI}(n) \otimes G_{xQ}(n)) + (h_{xx}(n) * (G_{yQ}(-n) \otimes G_{xI}(-n) - G_{yI}(-n) \otimes G_{xQ}(-n))) \qquad (44)$$

$$h'_{yx}(n) = h_{yx}(n) + j(h_{yx}(n) * (G_{xQ}(n) \otimes G_{xI}(n) - G_{xI}(n) \otimes G_{xQ}(n)) + (h_{yy}(n) * (G_{yQ}(n) \otimes G_{xI}(n) - G_{yI}(n) \otimes G_{xQ}(n))) \qquad (45)$$

$$h'_{yy}(n) = h_{yy}(n) - j(h_{yy}(n) * (G_{xQ}(n) \otimes G_{xI}(n) - G_{xI}(n) \otimes G_{xQ}(n)) + (h_{yx}(n) * (G_{yQ}(-n) \otimes G_{xI}(-n) - G_{yI}(-n) \otimes G_{xQ}(-n))) \qquad (46)$$

The DSP 128 determines $h'_{xx}$ and $h'_{xy}$, and $h'_{yy}$ and $h'_{yx}$ from the complementary and mutual orthogonality of the pairs of sequences mapped onto the complex components of the polarization of the optical signal 119. The pairs of sequences are transmitted simultaneously on the two polarization axes.

In an embodiment, the symbol rate of the optical signal is determined according to the distance between the Rayleigh backscatterers, in order to increase the number of null samples of the inter-correlations of the components $G_{xI}$, $G_{xQ}$, $G_{yI}$, $G_{yQ}$. In an example, the symbol rate is determined as follows:

$$f_{symb} = \frac{4p}{\frac{2n_g d_s}{c}} \qquad (47)$$

where $f_{symb}$ is the symbol rate, $n_g$ is the fiber group index, $c$ is the light velocity, $d_s$ is the average inter-distance between Rayleigh backscatterers, and $p$ is an integer. In an example, with 10m of inter-distance $d_s$ between the Rayleigh backscatterers, $f_{symb}$ is a multiple of 40MHz.

In an embodiment, the transmission of the pairs of sequences $G_{1a}$, $G_{1b}$ and $G_{2a}$, $G_{2b}$ is repeated. Such repetitions are advantageous as the optical fiber 160 and the Rayleigh backscatterers are sounded continuously, thereby enabling monitoring fiber events within the optical fiber 160 with a fine time granularity, which depends on the symbol frequency. The sounding duration of the optical fiber 160 is performed then during a duty cycle.

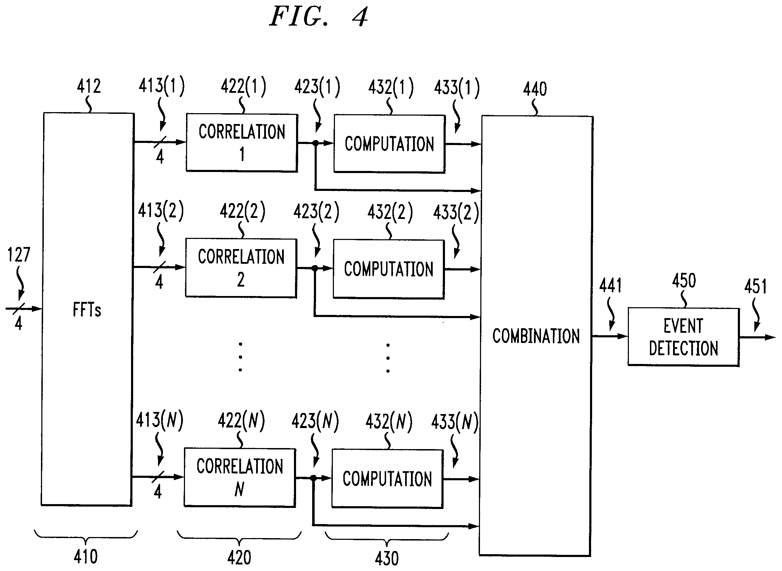

FIG. 4 is a block diagram of the processing performed by the DSP 128 of FIG. 1 to detect fiber events 451 in the optical fiber 160 according to an embodiment. As represented in FIG. 4, in order to detect the fiber events 451, the DSP 128 sequentially implements, in a pipeline manner, a data recovery stage 410, a correlation stage 420, a computation stage 430, a combination stage 440, and an event detection stage 450.

In the implementation of FIG. 4, the data recovery stage 410 has two fast Fourier transforms (FFTs) 412, one for each of the two complex polarization axes X and Y as represented by the four different multi-carrier digital signals 127 of FIG. 1, to recover four different digital signals 413(*i*) for each of the *N* different sub-carriers in the multi-carrier optical signal 119.

In either case, the 4*N* data streams 413(1)-413(*N*) are processed in a correlation stage 420 having *N* different correlation modules 422(1)-422(*N*), one for each different sub-carrier. Each correlation module 422(*i*) performs correlation processing between the four corresponding baseband signals 413(*i*) and the four digital code sequences used to modulate the corresponding sub-carrier of the optical signal 119 of FIG. 1 in order to extract a space-time map of the sub-carrier Jones matrices $J_i(d,t)$ (423(*i*)) for the corresponding sub-carrier. The correlation processing consists of four correlations to estimate the four coefficients of the 2x2 sub-carrier Jones matrices describing the temporal evolution of intensity, differential phase, and SOP along the sensed optical fiber 160 segment by segment. For the OFDM-BPSK coding scheme described previously, example correlations are presented in Equations (20)-(23). For the OFDM-QPSK coding scheme described previously, example correlations are presented in Equations (29)-(32).

For each sub-carrier, the spatial resolution (i.e., the size of the fiber segments over which the sub-carrier Jones matrices are computed) is fixed by the baud rate of the sub-carrier, and the temporal resolution is given by the length of the probing code. The estimates of the sub-carrier Jones matrices are refreshed with a temporal resolution given by the period $T_{code}$ of the probing sequence assuming that the sensed fiber is probed by a repetition of this sequence. Note that $T_{code}$ fixes the maximum bandwidth *BW* of the fiber events that can be monitored: $BW = 1/(2\ T_{code})$.

Following the correlation stage 420 is the computation stage 430 having N computation modules 432(1)-432(*N*), where each computation module 432(*i*) processes the corresponding sub-carrier Jones matrices $J_i(d,t)$ (423(*i*)) to generate sub-carrier reliability metrics $C_i(d, t)$ (433(*i*)) for the corresponding sub-carrier *i*, where $C_i(d, t) = |\det(J_i(d, t))|$, the magnitude of the determinant of the (2x2) sub-carrier Jones matrix for sub-carrier *i* at location *d* and time *t*. The sub-carrier reliability metrics $C_i(d, t)$ sufficiently correlate with the occurrence of phase artefacts to be used as a metric to characterize the reliability of the sub-carrier Jones matrices $J_i(d,t)$ generated using the optical sensing system 100 of FIG. 1. Those skilled in the art will understand that other values may also sufficiently correlate with the occurrence of the known phase artefacts to be able to be used as alternative reliability metrics. For example, $|\det(J^a(d, t))|$, $a > 1$, is an example of another value that might be able to be used as a reliability metric. Another value is the intensity $I(d,t) = Trace(J.J^*)$.

In the combination stage 440, a function is applied to the sub-carrier Jones matrices $J_i(d,t)$ (423(*i*)) the sub-carrier reliability metrics $C_i(d, t)$ (433(*i*)) to generate final Jones matrices $J(d,t)$ (441), one final Jones matrix for each pair of time (*t*) and distance (*d*) values. Depending on the particular implementation, the applied function may be a linear or non-linear function of the sub-carrier Jones matrices $J_i(d,t)$ and the sub-carrier reliability metrics $C_i(d, t)$.

In one possible linear function, each final Jones matrix $J(d,t)$ is generated as a weighted sum of the corresponding sub-carrier Jones matrices $J_i(d,t)$ as weighted by the corresponding sub-carrier reliability metrics $C_i(d, t)$, also known as maximum ratio combining (MRC), according to Equation (48) as follows:

$$J(d, t) = \frac{\sum_i C_i(d, t) \times J_i(d, t)}{\sum_i C_i(d, t)} \qquad (48)$$

In one possible non-linear function, the sub-carrier reliability metrics $C_i(d, t)$ are thresholded using an appropriate threshold value, and each final Jones matrix $J(d,t)$ is generated by averaging (with equal weighting) those sub-carrier Jones matrices $J_i(d,t)$ having corresponding sub-carrier reliability metrics $C_i(d, t)$ that are greater than the specified threshold value.

In another possible non-linear function, each final Jones matrix $J(d,t)$ is generated by the selecting the corresponding sub-carrier Jones matrix $J_i(d,t)$ having the highest sub-carrier reliability metric $C_i(d, t)$.

Those skilled in the art will understand that there are many other possible linear and non-linear functions for generating the final Jones matrices $J(d,t)$. A suitable function for on-line processing may be empirically derived off-line by trying a number of different linear and/or non-linear functions and selecting the one that performs best (i.e., produces the least number of false negative and/or false positive detections of simulated fiber events).

In addition, in some implementations, the on-line processing may involve the use of multiple different types of functions to generate multiple different candidate Jones matrices and then selecting one of those candidate Jones matrices to be the final Jones matrix. For example, in an embodiment with four sub-carriers, a first candidate Jones matrix could be generated by linearly combining all four sub-carrier Jones matrices, a second candidate Jones matrix could be generated by linearly combining the three sub-carrier Jones matrices having the highest sub-carrier reliability metrics, and the final Jones matrix could be selected to be the Jones matrix having the largest reliability metric of the first and second candidate Jones matrices and the original four sub-carrier Jones matrices.

In the event detection stage 450, the DSP 128 processes the final Jones matrices $J(d,t)$ (441) to generate fiber data that is used to detect fiber events 451. In an embodiment, the fiber data includes differential phase data $\Delta\varphi(d,t)$, optical intensity data $I(d,t)$, and state of polarization data $SOP(d,t)$ at different locations *d* along the optical fiber 160 and at times *t*.

The DSP 128 derives absolute phase values $\psi_{t,d}$ from the final Jones matrices *J* by calculating $\psi_{t,d}=(1/2)$ $arg(det(J))$, where *det* stands for the determinant of matrix *J* and *arg* stands for the angle, expressed in radians, of the complex value *det(J).* The absolute phase value $\psi_{t,d}$ for a location d represents the offset at time *t* between signal reflected from that location and received at the optical receiver 120. The DSP 128 generates differential (over distance) phase values $\Delta\varphi(d,t)$ by calculating $\Delta\varphi(d,t) = (\psi_{t,d} - \psi_{t,d-1})$, where each differential phase value $\Delta\varphi(d,t)$ represents the difference between the absolute phase value $\psi_{t,d}$ for the location d and the absolute phase value $\psi_{t,d-1}$ for the previous location *d-1*. As used herein, the term "previous location" refers to the location that is immediately upstream from the location d. For the first location (i.e., the location d closest to the optical circulator 140), the absolute phase value $\psi_{t,d}$ for that location may be used as a reference to extract the differential phases $\Delta\varphi(d,t)$ of the downstream locations.

The DSP 128 generates the intensity data *I(d,t)* as *Trace(J.J\*)* for each selected location *d* and time *t,* where *Trace* refers to the sum of the elements on the diagonal of a matrix, *J\** stands for the conjugate transpose of the 2x2 final Jones matrix *J*, and *(J.J\*)* represents the matrix product of the two matrices.

The DSP 128 generates the SOP data *SOP(d,t)* from the final Jones matrices using a suitable technique such as those based on the conventional Stokes or Muller mathematical transformation.

In the event detection stage 450, the DSP 128 (or, in some alternative implementations, a processor external to the DSP) monitors the differential phase data $\Delta\varphi(d,t)$ over multiple transmissions of the modulated optical signal 119 to detect fiber events 551. When a fiber event eventually occurs at some location along the optical fiber 160, the DSP 128 can detect that fiber event based on the temporal changes in the differential phase data $\Delta\varphi(d,t)$ for the Rayleigh backscatterer located immediately downstream of the fiber event (referred to as the "detected location"). If the differential phase data $\Delta\varphi(d,t)$ at a detected location indicates the existence of a fiber event, then the DSP 128 can conclude that the fiber event has occurred at or immediately upstream of that detected location.

For example, assuming that the locations of backscatterers $S_3$ and $S_4$ in FIG. 1 are two consecutive locations along the optical fiber 160, if the DSP 128 detects the existence of a fiber event in the differential phase data $\Delta\varphi(d,t)$ corresponding to the location of backscatterer $S_4$, then the DSP 128 can conclude that the fiber event occurred at a location that is somewhere (i) downstream of backscatterer $S_3$ and (ii) at or upstream of backscatterer $S_4$.

In one possible implementation, the DSP 128 can be configured to conclude that a fiber event has occurred when the variance of the differential phase data $\Delta\varphi(d,t)$ for a location *d* over a specified duration exceeds a specified variance threshold level. Other implementations may apply other criteria for detecting fiber events, including but not limited to thresholding the magnitude of the change in the differential phase data $\Delta\varphi(d,t)$ over a specified duration. A possible alternative criterion would be to search for a significant value or a significant change in the value in the power spectral density of the differential phase data $\Delta\varphi(d,t),$ for example, the occurrence of a spectral peak.

According to some implementations of the event detection stage 450, the DSP 128 generates a final reliability metric *C(d, t)* from each final Jones matrix *J(d,t)*, where, for example, *C(d, t)* = |det(*J(d, t)*)| and uses the resulting final reliability metrics *C(d, t)* to detect the fiber events 451, where the final reliability metrics *C(d, t)* sufficiently correlate with the occurrence of phase artefacts such that the value *C(d, t)* can be used as a metric to characterize the reliability of the phase-related data generated using the optical sensing system 100 of FIG. 1. Those skilled in the art will understand that other values may also sufficiently correlate with the occurrence of the known phase artefacts to be able to be used as alternative final reliability metrics. For example, |*det(J$^a$(d, t))* |, *a* > 1, is an example of another value that might be able to be used as a final reliability metric. Another value is the intensity *I(d,t)* = *Trace(J.J\*),* described previously.

According to certain embodiments of the disclosure, the processing of the optical sensing system 100 of FIG. 1 uses the final reliability metric *C(d, t)* to characterize the reliability of the phase-related data generated at location *d* and time *t.* According to some of these embodiments, the final reliability metric *C(d, t)* is used two times during the processing of the optical sensing system 100: once to select a subset of the available locations along the sensed optical fiber 160 to be used to generate the differential phase data $\Delta\varphi(d,t)$ used to detect fiber events and a second time to assess the reliability of those fiber-event detections.

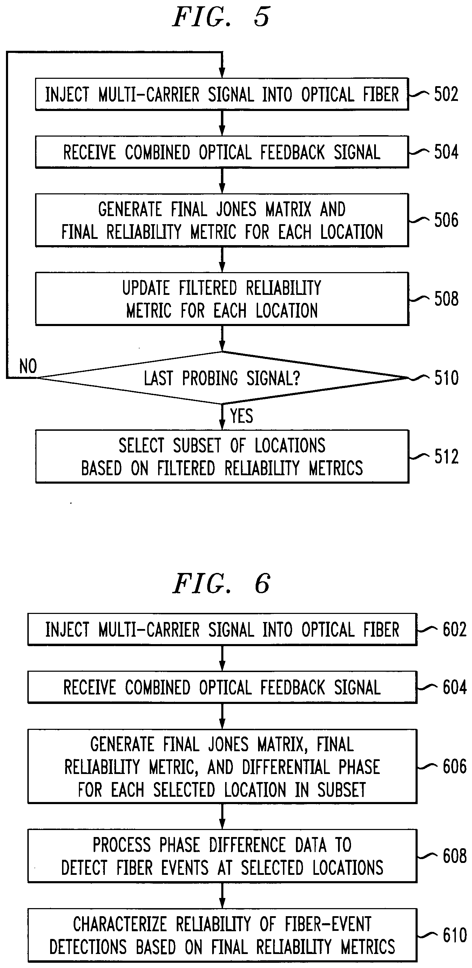

FIG. 5 is a flow diagram of example processing performed by the optical sensing system 100 of FIG. 1 to select the subset of the available locations along the sensed optical fiber 160 to be used to generate the differential phase data $\Delta\varphi(d,t)$ used to detect fiber events. According to this processing, an appropriate set of, for example, four digital-coded analog signals 111 is repeatedly used to generate a sequence of multiple instances of the multi-carrier probing signal 119 injected into the fiber 160. An average value mean$_d$(*C(d, t)*) of the final reliability metric *C(d, t)* is generated for each location d for the multiple probing-signal instances, where each instance of the probing signal corresponds to a different time *t*. The locations d having relatively large average final reliability metrics are then selected for use in generating the differential phase data $\Delta\varphi(d,t)$ used to detect fiber events.

In particular, referring to FIG. 5, in step 502, the transmitter 108 injects an instance of the multi-carrier probing signal 119 into the fiber 160, and, in step 504, the receiver 120 receives the corresponding combined optical feedback signal 161. In step 506, the DSP 128 recovers sub-carrier signals from the combined optical feedback signal 161, derives the sub-carrier Jones matrices $J_i(d, t)$ and the corresponding sub-carrier reliability metrics $C_i(d, t)$, and uses that data to generate the final Jones matrix *J(d, t)* and the corresponding final reliability metric *C(d, t)* for each location d along the fiber 160 for that probing-signal instance at time *t,* where each location *d* may correspond to a different backscatterer $S_i$.

In step 508, the DSP 128 updates a filtered reliability metric value for each location d that is related to the average final reliability metric mean$_d$($C$($d$, t)). In one possible implementation, each filtered reliability metric value is a running sum of all of the previous final reliability metrics $C(d, t)$ for the corresponding location d during the processing of FIG. 5. Note that the filtered reliability metrics are all reset to zero at the start of the processing of FIG. 5.

In some implementations, the processing of FIG. 5 is performed for a specified number of instances of the multi-carrier probing signal 119. In step 510, the DSP 128 determines whether the current probing-signal instance is the last instance for the processing of FIG. 5. If not, then processing returns to step 502 for the next probing-signal instance. Otherwise, processing continues to step 512.

In step 512, the DSP 128 selects the subset of the available locations d to be used, for example, to detect fiber events, as described below in the context of the processing of FIG. 6. In certain implementations, the DSP 128 logically divides the fiber 160 into multiple sub-groups of locations d and, for each sub-group, selects the location d having the greatest filtered reliability metric for that sub-group for inclusion in the subset of locations. In some implementations, each sub-group has the same specified number of locations. For example, an optical fiber 160 having 2000 available locations could be divided into 50 sub-groups, each sub-group having 40 locations. In other implementations, the fiber is logically divided into a specified number of segments of equal length, and each sub-group corresponds to the available locations d within a different segment of the fiber. For example, an optical fiber 160 that is 50 km long could be divided into 25,000 segments, each segment being 2 m long and each sub-group corresponding to all of the available locations d within a different fiber segment.

Note further that, in other implementations, instead of logically dividing the fiber 160 into sub-groups and then selecting the location d in each sub-group having the maximum filtered reliability metric value, the locations in the subset can be selected using some other algorithm. For example, the subset of locations can be identified by selecting all locations d along the fiber 160 having a filtered reliability metric value greater than a specified threshold value. As another example, the subset of locations can be identified by specifying a desired number of locations in the subset and then selecting that number of locations d having the largest filtered reliability metric values along the fiber 160.

At the end of the processing of FIG. 5, the DSP 128 will have selected a subset of locations $d$ that can be used to generate the differential phase data $\Delta\varphi(d,t)$ used to detect fiber events.

FIG. 6 is a flow diagram of example processing performed by the optical sensing system 100 of FIG. 1 to detect fiber events using the subset of locations d selected using the processing of FIG. 5. Note that the processing of FIG. 6 is repeated for each of multiple probing-signal instances. In step 602, the transmitter 108 injects a multi-carrier probing signal 119 into the fiber 160, and, in step 604, the receiver 120 receives the corresponding combined optical feedback signal 161. Note that, in some implementations, the multi-carrier probing signal 119 is based on the same digital-coded analog signals 111 used to generate the probing signals 119 used during the processing of FIG. 5. In other implementations, the digital-coded analog signals 111 may be different. In step 606, the DSP 128 generates final Jones matrices $J(d, t)$, the corresponding final reliability metrics $C(d, t)$, and differential phase data $\Delta\varphi(d,t)$ for that probing-signal instance at time $t$, but only for the selected locations d in the subset of locations selected during the processing of FIG. 5

In step 608, the DSP 128 processes the differential phase data $\Delta\varphi(d,t)$ for the current probing-signal instance, along with the differential phase data $\Delta\varphi(d,t)$ from one or more other probing-signal instances from previous implementations of the processing of FIG. 6, to detect fiber events along the fiber 160, e.g., using processing described previously in the context of FIG. 2. For example, each fiber-event detection may correspond to a characteristic variation in the differential phase data $\Delta\varphi(d,t)$ over a number of consecutive probing-signal instances at one or more of the consecutive selected locations d along the fiber 160.

In step 610, the DSP 128 uses the final reliability metrics $C(d, t)$ generated in step 606 to characterize the reliability of the fiber-event detections generated in step 608. In particular, for a detected fiber event determined to have occurred at a particular location d and a particular time $t$, the corresponding value of the final reliability metric $C(d, t)$ at that location and time can be used to quantify the reliability of that fiber-event detection, where greater values of $C(d, t)$ imply greater reliability. For a detected fiber event determined to have occurred over a number of adjacent locations d and/or over a number of consecutive times t, the corresponding plurality of final reliability metric values can be combined or otherwise taken into account to assess the reliability of that fiber-event detection.

Note that some of the previous processing described as being implemented by the DSP 128 could be implemented by another processor external to the optical sensing system 100 of FIG. 1. For example, an external processor could implement the processing of step 610. In certain embodiments, the DSP 128 could generate quantized, multi-bit (e.g., 4-6 bit) value(s) for the final reliability metric value(s) $C(d, t)$ associated with each fiber-event detection, where each quantized value could be normalized based on the actual maximum final reliability metric value $C(d, t)$ generated for the fiber 160. The DSP 128 could then transmit the corresponding multi-bit value(s), along with the location(s) d and time(s) t of each detected fiber event, to an external processor that could use the multi-bit value(s) to characterize the reliability of the fiber-event detection.

The processing of FIGs. 5 and 6 can be coordinated to enable the optical sensing system 100 of FIG. 1 to provide continuous monitoring of the fiber 160. In some embodiments, the processing of FIG. 5 can be performed over an initial time period to select a set of locations d to be used during a subsequent time period. For example, during the first second of every minute, the processing of FIG. 5 can be performed for $10^3$ probing-signal instances to select a subset of locations d to be used in the processing of FIG. 6 for the next 60 seconds. Note that, during the last of those 60 seconds, the processing of FIG. 5 is repeated to select a new subset of locations d while the processing of FIG. 6 continues to use the previous subset of locations d.

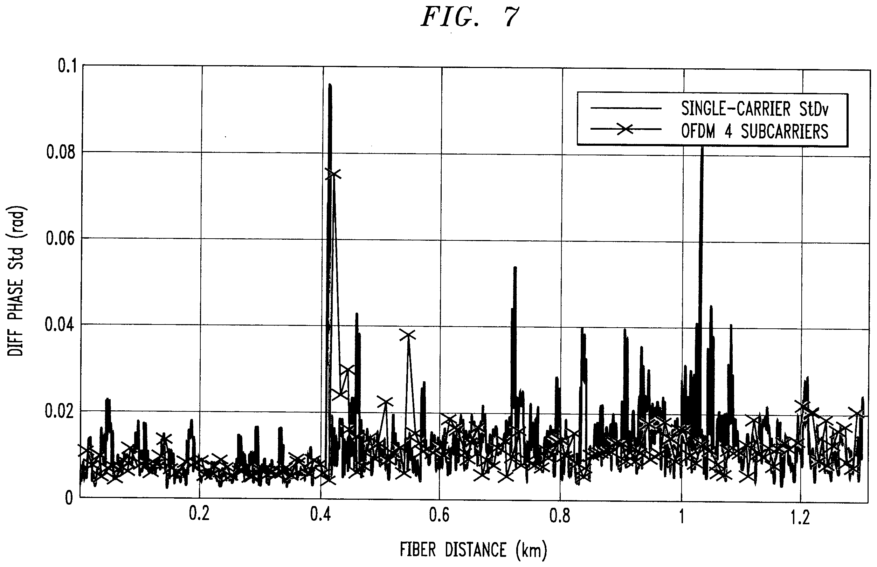

FIG. 7 is a graphical representation of differential phase data $\Delta\varphi(d,t)$ as a function of distance d for a given instant in time t for the optical sensing system 100 of FIG. 1 employing a multi-carrier probing signal 119 having four sub-carriers for a situation in which a fiber event (i.e., a mechanical perturbation) was induced at d=420m along a 1.3km optical fiber 160, where the final Jones matrices were generated by selecting the sub-carrier Jones matrix having the highest sub-carrier reliability metric vs. an analogous optical sensing system employing a single-carrier probing signal. As shown in FIG. 7, both techniques have significant peaks at d=420m corresponding to the actual fiber event. However, the data from the single-carrier technique has many more significant peaks than the data from the multi-carrier technique, which implies that the multi-carrier technique effectively reduces the chances of false-positive detections of fiber events as compared to the single-carrier technique.

As described earlier, the optical sensing system 100 of FIG. 1 employs an optical modulation scheme based on four digital coding sequences comprising BPSK codes for each of the X and Y polarization axes. Other embodiments are possible. For example, an alternative optical sensing system could employ an optical modulation scheme based on only two digital coding sequences comprising BPSK codes for only one polarization axis. For such an embodiment, only two digital-coded analog signals 111 would be used by the MZ modulator 116 to modulate only one polarization of the laser signal 115b to generate the probing signal 119. Such an embodiment would still have four ADCs 126 to digitize the four analog signals 125 recovered from the combined optical feedback signal 161, and the DSP 128 could still have the architecture of FIG. 4.

As another example, another alternative optical sensing system could employ an optical modulation scheme based on two pseudo-random digital coding sequences: one for each of the X and Y polarization axes. Here, too, only two digital-coded analog signals 111 would be used by the MZ modulator 116 to modulate the X and Y polarizations of the source laser signal 115b to generate the probing signal 119. Here, too, such an embodiment would still have four ADCs 126 to digitize the four analog signals 125 recovered from the combined optical feedback signal 161, and the DSP 128 could still have the architecture of FIG. 4.

As yet another example, yet another alternative optical sensing system could employ an optical modulation scheme based on only one pseudo-random digital coding sequences applied to only one of the X and Y polarization axes. Here, only one digital-coded analog signal 111 would be used by the MZ modulator 116 to modulate only one polarization of the source laser signal 115b to generate the probing signal 119. Here, too, such an embodiment would still have four ADCs 126 to digitize the four analog signals 125 recovered from the combined optical feedback signal 161, and the DSP 128 could still have the architecture of FIG. 4.

Those skilled in the art will understand that the optical sensing system 100 of FIG. 1 can perform the processing of FIGs. 5 and 6 in the context of any of the optical sensing techniques described in the cited papers and in the cited EP applications. For example, although preferred embodiments have been described in which the combined optical feedback signal 161 is generated by backscatterers located along the fiber 160 and returns to the circulator 140 along the same fiber 160, those skilled in the art will understand that alternative embodiments of the disclosure can be based on the multi-fiber configurations described in EP 20305062.0, where the probing signal and the combined optical feedback signal propagate along different optical fibers. As used herein, the term "optical fiber line" refers generically to optical links having a single optical fiber as well as optical links having multiple optical fibers. As such, embodiments of the disclosure can be implemented (i) using an optical fiber line having only one optical fiber, where the probing signal and the combined optical feedback signal both propagate along that one optical fiber or (ii) using an optical fiber line having at least two optical fibers, where the probing signal and the combined optical feedback signal propagate along different optical fibers of that optical fiber line.

The optical sensing system 100 and the optical fiber 160 of FIG. 1 could be used as a sensor designed to detect external events that produce fiber events in the optical fiber 160, such as earthquakes, passing trains, car/pedestrian traffic, intrusions in sensitive areas, etc. The optical sensing system 100 and the optical fiber 160 could also be used to as a sensor to detect the presence of certain chemicals that impact the differential phases of the reflected optical signals. Such chemical events may result in a single temporal differential phase change rather than multiple differential phase changes over time. In that case, such fiber events can be detected by thresholding the temporal differential phase change rather than thresholding variance.

Embodiments have been described that employ a polarization-multiplexed probing sequence and a dual-polarization coherent optical receiver 120 having a dual-polarization 90-degree hybrid coherent mixer 122 that generates eight optical component signals 123 and four O-to-E converters 124 that generate four digital signals 125. Alternative embodiments can employ (i) a single polarization probing sequence and a coherent optical receiver having a single-polarization 90-degree hybrid coherent mixer that generates four optical component signals and (ii) an O-to-E converter that generates only two digital signals. In that case, the DSP 128 would be able to generate only scalar complex results, instead of full Jones matrices, from which noisier (e.g., due to polarization fading in the combined optical feedback signal 161) differential phase estimates could be extracted. In that case, intensity data (or some other suitable value) may be used as the reliability metric.

Although embodiments have been described that detect fiber events based on differential phase data, in alternative embodiments, fiber events can be detected based on state of polarization (SOP) data. For example, the DSP 128 can be configured to monitor the SOP data for temporal variations that indicate the occurrence of fiber events. SOP data is estimated from the full final Jones matrix. SOP is commonly represented as a Stokes vector (a set of 4 values describing the polarization state of an electromagnetic field). The impact that a final Jones matrix $J$ has on a Stokes vector can be given by computing all or part of the 4x4 Mueller matrix $M$ as $M = A(J \otimes J^*)A^{-1}$ where $\otimes$ is the tensor Kronecker

product and $A = \begin{bmatrix} 1 & 0 & 0 & 1 \\ 1 & 0 & 0 & -1 \\ 0 & 1 & 1 & 0 \\ 0 & -i & i & 0 \end{bmatrix}$. Note that, in certain embodiments, the processing of FIG. 6 could be modified such that, in step 606, SOP data is generated instead of differential phase data, and, in step 608, fiber events are detected based on SOP data instead of being based on differential phase data.

Examples of the processing of the optical sensing system 100 of FIG. 1 has been described in the context of FIGs. 5 and 6, where the final reliability metric is used two different ways, i.e., in FIG. 5, to select the subset of locations d and again, in FIG. 6, to characterize the reliability of the fiber-event detections, both of which can contribute to the advantageous reduction in false positive detections of fiber events. In alternative embodiments, the final reliability metric may be used only one time. For example, the optical sensing system 100 may use the final reliability metric in the processing of FIG. 5 to select the subset of locations d, but not use the final reliability metric in the processing of FIG. 6 by skipping step 610. As another example, the optical sensing system 100 could omit the processing of FIG. 5 entirely and instead use the final reliability metric to perform the processing of FIG. 6 for all of the available locations d in the optical fiber 160 instead of only for a subset of those locations. In both of these alternative embodiments, the final reliability metric could still be used to reduce false positive detections of fiber events.

Various modifications of the described embodiments, as well as other embodiments within the scope of the disclosure, which are apparent to persons skilled in the art to which the disclosure pertains are deemed to lie within the principle and scope of the disclosure, e.g., as expressed in the appended claims.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

A person of ordinary skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The functions of the various elements shown in the figures, including any functional blocks labeled as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In this specification including any claims, the term "each" may be used to refer to one or more specified characteristics of a plurality of previously recited elements or steps. When used with the open-ended term "comprising," the recitation of the term "each" does not exclude additional, unrecited elements or steps. Thus, it will be understood that an apparatus may have additional, unrecited elements and a method may have additional, unrecited steps, where the additional, unrecited elements or steps do not have the one or more specified characteristics.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

As used herein and in the claims, the term "provide" with respect to an apparatus or with respect to a system, device, or component encompasses designing or fabricating the apparatus, system, device, or component; causing the apparatus, system, device, or component to be designed or fabricated; and/or obtaining the apparatus, system, device, or component by purchase, lease, rental, or other contractual arrangement.

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

## Claims

1. An apparatus (100) comprising:

    an optical transceiver (108, 120) configured to transmit light having multiple modulated sub-carriers into an end of an optical fiber line (160) and to perform phase-sensitive measurements of a part of the transmitted light received from the same end of the optical fiber line (160); and
    wherein the optical transceiver (108, 120) includes a digital processor (128) configured to determine subcarrier dual-polarization channel matrices for corresponding sets of sub-carrier, time, and location values based on the measurements, each of the sub-carrier dual-polarization channel matrices describing the part of the light for the subcarrier value of one of the sets received from the end in response to being passively redirected back at the time and location values of the one of the sets; **characterized in that**, for pairs of the time and location values, the digital processor (128) is configured to generate final dual-polarization channel matrices, each final dual-polarization channel matrix being a function of the determined sub-carrier dual-polarization channel matrices for the time and location values of a corresponding one of the pairs and corresponding subcarrier reliability metrics, each sub-carrier reliability metric being derived from a corresponding one of the determined sub-carrier dual-polarization channel matrices and indicating the reliability of estimated phase values at a particular location and time.

2. The apparatus of claim 1, wherein each sub-carrier reliability metric is the magnitude of the determinant of the corresponding one of the determined sub-carrier dual-polarization channel matrices.

3. The apparatus (100) of any of claims 1 - 2, wherein the digital processor (128) is configured to detect one or more fiber events along the optical fiber line (160) based a time evolution of one or more of the determined final dual-polarization channel matrices.

4. The apparatus (100) of claim 3, wherein the digital processor (128) is configured to detect the one or more fiber events based on a time evolution of phases of the determinants of the determined final dual-polarization channel matrices.

5. The apparatus (100) of any of claims 3 - 4, wherein the digital processor (128) is configured to provide estimated locations and times for the detected one or more fiber events.

6. The apparatus (100) of claim 5, wherein the optical transceiver is further configured to characterize a reliability of detection of one of the one or more fiber events based on a magnitude of the determinant of the determined final dual-polarization channel matrix at the estimated location and time for the one of the one or more fiber events.

7. The apparatus (100) of any of claims 1 - 6, wherein the optical transceiver (108, 120) is configured to perform optical time-domain reflectometry on a part of the transmitted light received at the same end of the same optical fiber of the optical fiber line (160).

8. A method comprising:

determining sub-carrier dual-polarization channel matrices for sets of sub-carrier, time, and location values by performing phase-sensitive optical time-domain reflectometry on an optical fiber line (160), each of the sub-carrier dual-polarization channel matrices describing light of one of the sub-carriers of a corresponding one of the sets being received from an end of the optical fiber line (160) in response to light of the one of the sub-carriers being transmitted into the end and backscattering in the optical fiber line at the time and location values of the one of the sets; **characterized in that**, for at least one pair of the time and location values, generating a corresponding final dual-polarization channel matrix as a function of the determined sub-carrier dual-polarization channel matrices for the at least one pair and sub-carrier reliability metrics, each of the subcarrier reliability metrics being derived from a corresponding one of the determined sub carrier dual-polarization channel matrices and indicating the reliability of estimated phase values at a particular location and time.

9. The method of claim 8, wherein each of the sub-carrier reliability metrics is the magnitude of the determinant of the corresponding one of the sub-carrier dual-polarization channel matrices.

10. The method of any of claims 8-9, further comprising detecting one or more fiber events along the optical fiber line (160) based a time evolution of the final dual-polarization channel matrices.

11. The method of claim 10, further comprising characterizing reliability of individual ones of the detected one or more fiber events based on magnitudes of the determinants of the final dual-polarization channel matrices at the estimated location and time for the individual ones of the detected one or more fiber events.

**Patentansprüche**

1. Vorrichtung (100), umfassend:

einen optischen Sendeempfänger (108, 120), der konfiguriert ist, Licht mit mehreren modulierten Unterträgern in ein Ende einer optischen Faserleitung (160) zu senden und phasenempfindliche Messungen eines Teils des gesendeten Lichts durchzuführen, das von demselben Ende der optischen Faserleitung (160) empfangen wird; und
wobei der optische Sendeempfänger (108, 120) einen digitalen Prozessor (128) enthält, der konfiguriert ist, Unterträger-Dualpolarisations-Kanalmatrizen für entsprechende Sätze von Unterträger-, Zeit- und Positionswerten auf der Grundlage der Messungen zu bestimmen, wobei jede der Unterträger-Dualpolarisations-Kanalmatrizen den Teil des Lichts für den Unterträgerwert eines der Sätze beschreibt, der vom Ende als Antwort auf das passive Zurückleiten zu den Zeit- und Positionswerten des einen der Sätze empfangen wird;
**dadurch gekennzeichnet, dass** der digitale Prozessor (128) für Paare der Zeit- und Positionswerte konfiguriert ist, finale Dualpolarisations-Kanalmatrizen zu erzeugen, wobei jede finale Dualpolarisations-Kanalmatrix eine Funktion der bestimmten Unterträger-Dualpolarisations-Kanalmatrizen für die Zeit- und Positionswerte eines entsprechenden Paares der Paare und entsprechender Unterträger-Zuverlässigkeitsmetriken ist, wobei jede Unterträger-Zuverlässigkeitsmetrik von einer entsprechenden der bestimmten Unterträger-Dualpolarisations-Kanalmatrizen abgeleitet ist und die Zuverlässigkeit von geschätzten Phasenwerten an einer bestimmten Position und zu einem bestimmten Zeitpunkt angibt.

2. Vorrichtung nach Anspruch 1, wobei jede Unterträger-Zuverlässigkeitsmetrik der Betrag der Determinante der entsprechenden der bestimmten Unterträger-Dualpolarisations-Kanalmatrizen ist.

3. Vorrichtung (100) nach einem der Ansprüche 1 bis 2, wobei der digitale Prozessor (128) konfiguriert ist, ein oder mehrere Faserereignisse entlang der optischen Faserleitung (160) auf der Grundlage einer zeitlichen Entwicklung einer oder mehrerer der bestimmten finalen Dualpolarisations-Kanalmatrizen zu detektieren.

4. Vorrichtung (100) nach Anspruch 3, wobei der digitale Prozessor (128) konfiguriert ist, das eine oder die mehreren Faserereignisse auf der Grundlage einer zeitlichen Entwicklung von Phasen der Determinanten der bestimmten finalen Dualpolarisations-Kanalmatrizen zu detektieren.

5. Vorrichtung (100) nach einem der Ansprüche 3 bis 4, wobei der digitale Prozessor (128) konfiguriert ist, geschätzte Positionen und Zeiten für das eine oder die mehreren detektierten Faserereignisse bereitzustellen.

6. Vorrichtung (100) nach Anspruch 5, wobei der optische Sendeempfänger ferner konfiguriert ist, eine Zuverlässigkeit der Detektion eines der einen oder mehreren Faserereignisse auf der Grundlage eines Betrags der Determinante der bestimmten finalen Dualpolarisations-Kanalmatrix an der geschätzten Position und zum geschätzten Zeitpunkt für das eine der einen oder mehreren Faserereignisse zu charakterisieren.

7. Vorrichtung (100) nach einem der Ansprüche 1 bis 6, wobei der optische Sendeempfänger (108, 120) konfiguriert ist, optische Zeitbereichsreflektometrie an einem Teil des gesendeten Lichts durchzuführen, das am selben Ende derselben optischen Faser der optischen Faserleitung (160) empfangen wird.

8. Verfahren, umfassend:

Bestimmen von Unterträger-Dualpolarisations-Kanalmatrizen für Sätze von Unterträger-, Zeit- und Positionswerten durch Durchführen von phasenempfindlicher optischer Zeitbereichsreflektometrie an einer optischen Faserleitung (160), wobei jede der Unterträger-Dualpolarisations-Kanalmatrizen Licht eines der Unterträger eines entsprechenden der Sätze beschreibt, das von einem Ende der optischen Faserleitung (160) empfangen wird, als Antwort darauf, dass Licht des einen der Unterträger in das Ende gesendet wird und in der optischen Faserleitung an den Zeit- und Positionswerten des einen der Sätze rückgestreut wird;
**dadurch gekennzeichnet, dass** für mindestens ein Paar der Zeit- und Positionswerte eine entsprechende finale Dualpolarisations-Kanalmatrix als Funktion der bestimmten Unterträger-Dualpolarisations-Kanalmatrizen für das mindestens eine Paar und von Unterträger-Zuverlässigkeitsmetriken erzeugt wird, wobei jede der Unterträger-Zuverlässigkeitsmetriken von einer entsprechenden der bestimmten Unterträger-Dualpolarisations-Kanalmatrizen abgeleitet ist und die Zuverlässigkeit von geschätzten Phasenwerten an einer bestimmten Position und zu einem bestimmten Zeitpunkt angibt.

9. Verfahren nach Anspruch 8, wobei jede der Unterträger-Zuverlässigkeitsmetriken der Betrag der Determinante der entsprechenden der Unterträger-Dualpolarisations-Kanalmatrizen ist.

10. Verfahren nach einem der Ansprüche 8 bis 9, ferner umfassend das Detektieren eines oder mehrerer Faserereignisse entlang der optischen Faserleitung (160) auf der Grundlage einer zeitlichen Entwicklung der finalen Dualpolarisations-Kanalmatrizen.

11. Verfahren nach Anspruch 10, ferner umfassend das Charakterisieren der Zuverlässigkeit einzelner der detektierten einen oder mehreren Faserereignisse auf der Grundlage von Beträgen der Determinanten der finalen Dualpolarisations-Kanalmatrizen an der geschätzten Position und zum geschätzten Zeitpunkt für die einzelnen der detektierten einen oder mehreren Faserereignisse.

**Revendications**

1. Appareil (100) comprenant :

un émetteur-récepteur optique (108, 120) configuré pour émettre de la lumière ayant de multiples sous-porteuses modulées dans une extrémité d'une ligne de fibre optique (160) et pour effectuer des mesures sensibles en phase d'une partie de la lumière émise reçue depuis la même extrémité de la ligne de fibre optique (160) ; et

dans lequel l'émetteur-récepteur optique (108, 120) comprend un processeur numérique (128) configuré pour déterminer des matrices de canal à double polarisation de sous-porteuse pour des ensembles correspondants de valeurs de sous-porteuse, de temps et de position sur la base des mesures, chacune des matrices de canal à double polarisation de sous-porteuse décrivant la partie de la lumière pour la valeur de sous-porteuse de l'un des ensembles reçue depuis l'extrémité en réponse au fait d'être redirigée passivement en retour aux valeurs de temps et de position de l'un des ensembles ;

**caractérisé en ce que**, pour des paires des valeurs de temps et de position, le processeur numérique (128) est configuré pour générer des matrices de canal à double polarisation finales, chaque matrice de canal à double polarisation finale étant une fonction des matrices de canal à double polarisation de sous-porteuse déterminées pour les valeurs de temps et de position d'une paire correspondante parmi les paires et de métriques de fiabilité de sous-porteuse correspondantes, chaque métrique de fiabilité de sous-porteuse étant dérivée d'une matrice correspondante parmi les matrices de canal à double polarisation de sous-porteuse déterminées et indiquant la fiabilité de valeurs de phase estimées à une position et un temps particuliers.

2. Appareil selon la revendication 1, dans lequel chaque métrique de fiabilité de sous-porteuse est la magnitude du déterminant de la matrice correspondante parmi les matrices de canal à double polarisation de sous-porteuse déterminées.

3. Appareil (100) selon l'une quelconque des revendications 1 à 2, dans lequel le processeur numérique (128) est configuré pour détecter un ou plusieurs événements de fibre le long de la ligne de fibre optique (160) sur la base d'une évolution temporelle d'une ou plusieurs des matrices de canal à double polarisation finales déterminées.

4. Appareil (100) selon la revendication 3, dans lequel le processeur numérique (128) est configuré pour détecter le ou les événements de fibre sur la base d'une évolution temporelle de phases des déterminants des matrices de canal à double polarisation finales déterminées.

5. Appareil (100) selon l'une quelconque des revendications 3 à 4, dans lequel le processeur numérique (128) est configuré pour fournir des positions et des temps estimés pour le ou les événements de fibre détectés.

6. Appareil (100) selon la revendication 5, dans lequel l'émetteur-récepteur optique est en outre configuré pour caractériser une fiabilité de détection de l'un du ou des événements de fibre sur la base d'une magnitude du déterminant de la matrice de canal à double polarisation finale déterminée à la position et au temps estimés pour ledit événement parmi le ou les événements de fibre.

7. Appareil (100) selon l'une quelconque des revendications 1 à 6, dans lequel l'émetteur-récepteur optique (108, 120) est configuré pour effectuer une réflectométrie optique dans le domaine temporel sur une partie de la lumière émise reçue à la même extrémité de la même fibre optique de la ligne de fibre optique (160).

8. Procédé comprenant :

la détermination de matrices de canal à double polarisation de sous-porteuse pour des ensembles de valeurs de sous-porteuse, de temps et de position par réalisation d'une réflectométrie optique dans le domaine temporel sensible en phase sur une ligne de fibre optique (160), chacune des matrices de canal à double polarisation de sous-porteuse décrivant la lumière de l'une des sous-porteuses d'un ensemble correspondant parmi les ensembles reçue depuis une extrémité de la ligne de fibre optique (160) en réponse à la lumière de ladite sous-porteuse parmi les sous-porteuses étant émise dans l'extrémité et rétrodiffusée dans la ligne de fibre optique aux valeurs de temps et de position de l'un des ensembles ;

**caractérisé en ce que**, pour au moins une paire des valeurs de temps et de position, la génération d'une matrice de canal à double polarisation finale correspondante en tant que fonction des matrices de canal à double polarisation de sous-porteuse déterminées pour ladite au moins une paire et de métriques de fiabilité de sous-porteuse, chacune des métriques de fiabilité de sous-porteuse étant dérivée d'une matrice correspondante parmi les matrices de canal à double polarisation de sous-porteuse déterminées et indiquant la fiabilité de valeurs de phase estimées à une position et un temps particuliers.

9. Procédé selon la revendication 8, dans lequel chacune des métriques de fiabilité de sous-porteuse est la magnitude du déterminant de la matrice correspondante parmi les matrices de canal à double polarisation de sous-porteuse.

10. Procédé selon l'une quelconque des revendications 8 à 9, comprenant en outre la détection d'un ou plusieurs événements de fibre le long de la ligne de fibre optique (160) sur la base d'une évolution temporelle des matrices de canal à double polarisation finales.

11. Procédé selon la revendication 10, comprenant en outre la caractérisation de la fiabilité d'événements individuels parmi le ou les événements de fibre détectés sur la base de magnitudes des déterminants des matrices de canal à double polarisation finales à la position et au temps estimés pour les événements individuels parmi le ou les événements de fibre détectés.

FIG. 1

100

EP 4 020 840 B1

# FIG. 2

FIG. 3

# FIG. 4

## FIG. 5

INJECT MULTI-CARRIER SIGNAL INTO OPTICAL FIBER — 502

RECEIVE COMBINED OPTICAL FEEDBACK SIGNAL — 504

GENERATE FINAL JONES MATRIX AND
FINAL RELIABILITY METRIC FOR EACH LOCATION — 506

UPDATE FILTERED RELIABILITY
METRIC FOR EACH LOCATION — 508

NO — LAST PROBING SIGNAL? — 510

YES

SELECT SUBSET OF LOCATIONS
BASED ON FILTERED RELIABILITY METRICS — 512

## FIG. 6

INJECT MULTI-CARRIER SIGNAL INTO OPTICAL FIBER — 602

RECEIVE COMBINED OPTICAL FEEDBACK SIGNAL — 604

GENERATE FINAL JONES MATRIX, FINAL
RELIABILITY METRIC, AND DIFFERENTIAL PHASE
FOR EACH SELECTED LOCATION IN SUBSET — 606

PROCESS PHASE DIFFERENCE DATA TO
DETECT FIBER EVENTS AT SELECTED LOCATIONS — 608

CHARACTERIZE RELIABILITY OF FIBER-EVENT
DETECTIONS BASED ON FINAL RELIABILITY METRICS — 610

## FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3694117 A1

- EP 20305062